# EUROPEAN PATENT APPLICATION

(11) **EP 2 003 550 A1**
(43) Date of publication of application: **17.12.2008**
(21) Application number: 08009970.8
(22) Date of filing: 30.05.2008
(51) Int. Cl.: G06F 9/445

(54) **System and method for managing evolving user preferences**

(30) Priority: 12.06.2007 US 943461 P; 12.05.2008 US 119019
(71) Applicant: Broadcom Corporation, Irvine, CA 92617 (US)
(72) Inventor: Karaoguz, Jeyhan, 92606 Irvine CA (US); Behzad, Arya Reza, 92064 Poway CA (US); Buer, Mark, 85296 Gilbert (US); MacInnis, Alexander G., 48104 Ann Arbor MI (US); Quigley, Thomas J., 28734 Franklin (US); Walley, John, 92694 Ladera Ranch CA (US)
(74) Representative: Jehle, Volker Armin

(57) **Abstract**

A system and method for managing evolving user preferences. Various aspects of the present invention may, for example and without limitation, comprise maintaining a user preference profile in which is stored a variety of information, including information indicating the manner in which a user desires an electronic device to operate. Information of the manner in which a user utilizes an electronic device may, for example, be obtained, and the user preference profile may be maintained in accordance with such information. The user profile information may, for example, be transferred between various computing systems and/or devices.

## Description

### CROSS-REFERENCE TO RELATED APPLICATIONS/INCORPORATION BY REFERENCE

This patent application is related to and claims priority from provisional patent application serial number 60/943, 461 filed June 12, 2007, and titled "SYSTEM AND METHOD FOR MANAGING EVOLVING USER PREFERENCES," the contents of which are hereby incorporated herein by reference in their entirety.

### FEDERALLY SPONSORED RESEARCH OR DEVELOPMENT

[Not Applicable]

### SEQUENCE LISTING

[Not Applicable]

### MICROFICHE/COPYRIGHT REFERENCE

[Not Applicable]

### BACKGROUND OF THE INVENTION

Many devices today utilize user preferences to tailor operation to have characteristics desired by a particular user or group of users. Users generally have to manually enter user preferences for each device.

Further limitations and disadvantages of conventional and traditional approaches will become apparent to one of skill in the art, through comparison of such systems with the present invention as set forth in the remainder of the present application with reference to the drawings.

### BRIEF SUMMARY OF THE INVENTION

Various aspects of the present invention provide a system and method for managing evolving user preferences, substantially as shown in and/or described in connection with at least one of the figures, as set forth more completely in the claims.
According to an aspect, in a computing system, method for managing evolving user preferences is provided, the method comprising:
forming a user profile comprising information regarding the manner in which a user prefers one or more electronic devices separate from the computing system to operate;
storing the user profile in memory;
obtaining information regarding the manner in which the user is utilizing an electronic device separate from the computing system;
analyzing at least the manner in which the user is utilizing the electronic device and the stored user profile to determine whether to modify the stored user profile; and
if it is determined to modify the stored user profile, then modifying the stored user profile based, at least in part, on the manner in which the user is utilizing the electronic device.
Advantageously, the user profile comprises information regarding the manner in which the user prefers a plurality of different electronic devices to operate.
Advantageously, the user profile comprises information regarding the manner in which the user prefers a plurality of different types of electronic devices to operate.
Advantageously, the information regarding the manner in which the user prefers one or more electronic devices to operate comprises information regarding the manner in which the user prefers information to be presented to the user.
Advantageously, the information regarding the manner in which the user prefers one or more electronic devices to operate comprises information regarding the manner in which the user prefers information to be processed.
Advantageously, the information regarding the manner in which the user prefers one or more electronic devices to operate comprises information regarding the manner in which the user prefers one or more electronic devices to communicate with systems external to the one or more electronic devices.
Advantageously, obtaining information regarding the manner in which the user is utilizing an electronic device comprises monitoring utilization of the electronic device by the user.
Advantageously, analyzing at least the manner in which the user is utilizing the electronic device and the stored user profile to determine whether to modify the stored user profile comprises:
determining a level of significance of a difference between the manner in which the user is utilizing the electronic device and the stored user profile; and
determining whether to modify the stored user profile based, at least in part, on the determined level of significance.
Advantageously, analyzing at least the manner in which the user is utilizing the electronic device and the stored user profile to determine whether to modify the stored user profile comprises statistically analyzing the manner in which the user is utilizing the electronic device.
Advantageously, analyzing at least the manner in which the user is utilizing the electronic device and the stored user profile to determine whether to modify the stored user profile comprises analyzing a trend in the manner in which the user is utilizing the electronic device.
Advantageously, the method further comprises providing information from the stored user profile to a second electronic device associated with the user.
According to an aspect, in an electronic device, a method for managing evolving user preferences comprises:
determining a manner in which a user is operating the electronic device;
communicatively coupling to a computing system that is separate from the electronic device; and
communicating information regarding the determined manner to the computing system, the communicated information causing the computing system to modify a user profile corresponding to the user, the user profile comprising information regarding the manner in which the user prefers one or more electronic devices to operate.
Advantageously, the information regarding the determined manner in which the user is operating the electronic device comprises information regarding the manner in which the user has directed the electronic device to present information to the user.
Advantageously, the information regarding the determined manner in which the user is operating the electronic device comprises information regarding the manner in which the user has directed the electronic device to process information.
Advantageously, the information regarding the determined manner in which the user is operating the electronic device comprises information regarding the manner in which the user has directed the electronic device to communicate with systems external to the electronic device.
Advantageously, determining a manner in which a user is operating the electronic device comprises:
monitoring utilization of the electronic device by the user: and
determining, based at least in part on the monitoring, the manner in which the user is operating the electronic device.
Advantageously, determining a manner in which a user is operating the electronic device comprises analyzing operational settings specified by the user while utilizing the electronic device.
Advantageously, communicatively coupling to a computing system comprises communicatively coupling to the computing system through a communication network.
Advantageously, the information regarding the determined manner comprises information of how the user is presently utilizing the electronic device.
Advantageously, the information regarding the determined manner comprises information of how the user has utilized the electronic device during an interval.
Advantageously, the information regarding the determined manner comprises information regarding a difference between how the user is utilizing the electronic device and how the user previously utilized the electronic device.
According to an aspect, in an electronic device, a method for managing evolving user preferences is provided, the method comprising:
establishing a communication link to a computing system that has access to a user profile, the user profile comprising user preference information regarding the manner in which the user prefers one or more electronic devices separate from the computing system to operate;
receiving at least a portion of the user preference information from the computing system; and
operating the electronic device in accordance with the received user preference information.
Advantageously, the received user preference information comprises information regarding the manner in which the user prefers information to be presented to the user.
Advantageously, the received user preference information comprises information regarding the manner in which the user prefers information to be processed.
Advantageously, the received user preference information comprises information regarding the manner in which the user prefers an electronic device to communicate with systems external to the electronic device.
Advantageously, the received user preference information comprises information regarding the manner in which the user has utilized the device over an interval.
Advantageously, establishing a communication link to a computing system comprises establishing a communication link to the computing system through a communication network.
Advantageously, the method further comprises requesting a particular type of user preference information from the computing system.
Advantageously, the establishing, receiving and operating steps are performed automatically without direct user initiation.
According to an aspect, in a computing system, a method for managing user preference information comprises:
storing a user profile in memory of the computing system, the user profile comprising information regarding the manner in which a user prefers one or more electronic devices separate from the computing system to operate;
receiving at the computing system information from an electronic device separate from the computing system regarding the manner in which the user is utilizing the electronic device; and
maintaining the stored user profile based, at least in part, on the received information.
Advantageously, the information received from the electronic device is unsolicited.
Advantageously, the method further comprises, prior to receiving the information from the electronic device, requesting the information from the electronic device.
Advantageously, the received information from the electronic device regarding the manner in which the user is utilizing the electronic device comprises information regarding the manner in which the user prefers information to be presented to the user.
Advantageously, the received information from the electronic device regarding the manner in which the user is utilizing the electronic device comprises information regarding the manner in which the user prefers information to be processed.
Advantageously, the received information from the electronic device regarding the manner in which the user is utilizing the electronic device comprises information regarding the manner in which the user prefers information to be processed.
Advantageously, the received information from the electronic device regarding the manner in which the user is utilizing the electronic device comprises information regarding the manner in which the user has utilized the device over an interval.
Advantageously, maintaining the stored user profile based, at least in part, on the received information comprises analyzing the received information and the stored user profile to determine whether to modify the stored user profile.
According to an aspect, in a computing system, a method for managing user preference information comprises:
receiving at the computing system information from a first electronic device separate from the computing system regarding the manner in which a user is utilizing the first electronic device.
managing, based at least in part on the received information, a user profile stored at the computing system, the user profile comprising information regarding the manner in which the user prefers one or more electronic devices separate from the computing system to operate;
communicating information from the user profile to a second electronic device separate from the computing system and associated with the user.
Advantageously, the information received from the first electronic device is unsolicited.
Advantageously, the information from the user profile communicated to the second electronic device comprises information regarding the manner in which the user prefers information to be presented to the user.
Advantageously, the information from the user profile communicated to the second electronic device comprises information regarding the manner in which the user prefers information to be processed.
Advantageously, the information from the user profile communicated to the second electronic device comprises information regarding the manner in which the user prefers information to be processed.
Advantageously, managing, based at least in part on the received information, the stored user profile comprises analyzing the received information and the stored user profile to determine whether to modify the stored user profile.
Advantageously, the first and second electronic devices are different fundamental types of devices.
Advantageously, the first and second electronic devices are the same fundamental type of device.
Advantageously, communicating information from the user profile to the second electronic device comprises communicating the information from the user profile in response to a request from the second electronic device.
Advantageously, communicating information from the user profile to the second electronic device comprises communicating the information from the user profile in response to a request from the second electrical device for a particular type of information regarding the manner in which the user prefers one or more electrical devices to operate.
According to an aspect, electrical circuitry for managing user preference information is provided, the electrical circuitry comprising:
at least one circuit that operates to, at least:
   determine a manner in which a user prefers an electronic device to operate;
   communicatively couple to a computing system that is separate from the electronic device; and
   communicate information regarding the determined manner to the computing system, the communicated information causing the computing system to modify a user profile corresponding to the user, the user profile comprising information regarding the manner in which the user prefers one or more electronic devices to operate.
According to an aspect, electrical circuitry for managing user preference information is provided, the electrical circuitry comprising:
at least one circuit that operates to, at least:
   establish a communication link to a computing system that has access to a user profile, the user profile comprising user preference information regarding the manner in which the user prefers one or more electronic devices separate from the computing system to operate;
   receive at least a portion of the user preference information from the computing system; and
   operate the electronic device in accordance with the received user preference information.
These and other advantages, aspects and novel features of the present invention, as well as details of illustrative aspects thereof, will be more fully understood from the following description and drawings.

### BRIEF DESCRIPTION OF SEVERAL VIEWS OF THE DRAWINGS

Figure 1 is a diagram illustrating a non-limiting exemplary system scenario incorporating management of evolving user preferences, in accordance with various aspects of the present invention.

Figure 2 is a diagram illustrating a second non-limiting exemplary system scenario incorporating management of evolving user preferences, in accordance with various aspects of the present invention.

Figure 3 is a block diagram of an exemplary system, in accordance with various aspects of the present invention.

Figure 4 illustrates a flow diagram of an exemplary method in a computing system for managing evolving user preferences, in accordance with various aspects of the present invention.

Figure 5 illustrates a flow diagram of an exemplary method in an electronic device for managing evolving user preferences, in accordance with various aspects of the present invention.

Figure 6 illustrates a flow diagram of an exemplary method in an electronic device for managing evolving user preferences, in accordance with various aspects of the present invention.

### DETAILED DESCRIPTION OF THE INVENTION

A user (or group of users) may have preferences regarding the manner in which the user desires an electronic device to operate. Such user preferences may transcend particular devices. For example and without limitation, devices that provide video and/or audio output to a user may eventually be governed by similar or same user preferences. Also for example, a user may have particular network preferences *(e.g.,* preferring to utilize particular networks and/or communication protocols), and such preferences may be consistent between a plurality of different devices. Additionally for example, a user may consistently utilize a particular device or application in a particular manner, where such utilization corresponds to particular information presentation characteristics, signal processing characteristics, communication characteristics, etc. For example, a user may have preferred networks and/or network access points to access and/or file types to access or download. Further for example, a user may utilize preferred gaming settings, which may be utilized similarly on different devices.

A non-limiting set of illustrative user operational preferences may, for example, include: audio settings (e.g., file type, volume, equalization settings, quality settings, Quality of Service "QoS" settings, input settings, output settings, interface device settings, surround sound type or other surround sound settings, language, preferred software application, audio streaming settings, preferred channel, preferred source, etc.), video settings (e.g., brightness, contrast, definition, dimensions, aspect ratio, file type, resolution, color palette, subtitle characteristics, preferred software application, preferred channel, preferred source, preferred video streaming settings, webpage characteristics, etc.), network access settings (e.g., preferred network(s), preferred network settings, QoS, secure access / privacy settings, preferred protocols, preferred communication media, etc.), file settings (e.g., preferred file types, resolutions, encoding types, etc.), preferences related to particular services accessed (e.g., media streaming services, file transfer services, person-to-person communication services, etc.), preferences related to particular operations performed (e.g., word processing, graphics design, spreadsheet activities, etc.), financial preferences (e.g., related to costs that a user is willing to pay for an object, information or service), power saving preferences (e.g., sleep mode operating characteristics, peripheral shutdown characteristics, warnings, etc.), device operating modes, password information, etc.

Note that such user operational preferences are herein distinguished from mere data (e.g., information to be presented to a user). Such mere data may, for example, correspond to particular media files, a list of particular media files associated with a user (e.g., a play list), particular word or number processing files, a list of contacts, calendar information, one or more email messages, etc. User operational preferences, as discussed herein, generally concern the operations performed by an electronic device and/or the manner in which an electronic device performs its operations.

Such user preferences may evolve over time. For example and without limitation, a user's preferences regarding the manner in which a device operates may change as a user experiences new or different manners of device operation. Also for example, a user's preferences may change as the user changes. Further for example, a user's preferences may change as technology changes. Still further for example, a user's preferences may change as the manner in which a user utilizes a particular electronic device or particular type of electronic device changes.

In accordance with various aspects of the present invention, a profile of a user's (or user's group's) preferences regarding the manner in which the user desires one or more electronic devices to operate may be maintained and updated/evolved over time. Such a profile may then be accessed by a plurality of user electronic devices to obtain user preference information. Such a profile, or portions thereof, may migrate between user electronic devices.

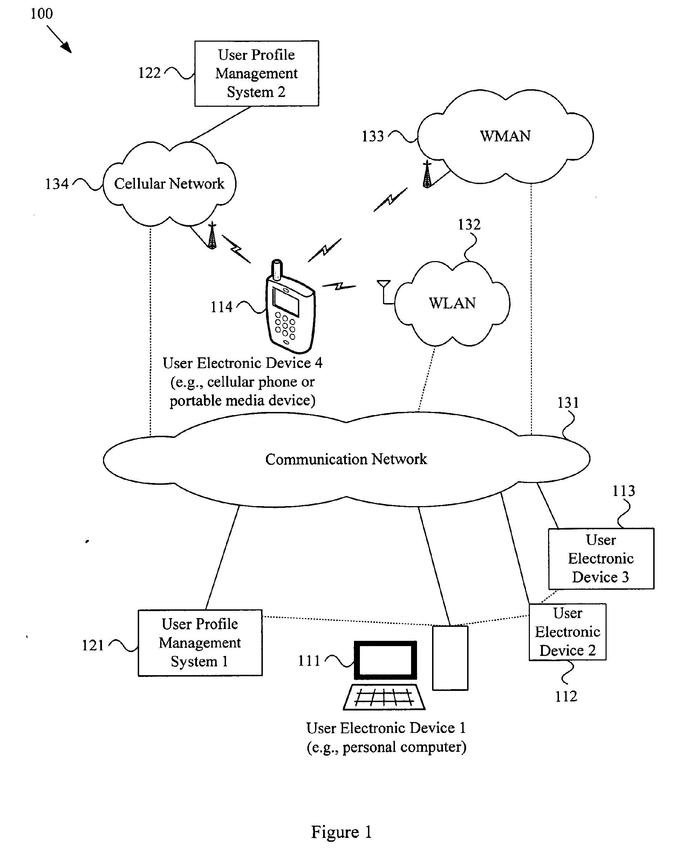

Figure 1 is a diagram illustrating a non-limiting exemplary system scenario 100 incorporating management of evolving user preferences, in accordance with various aspects of the present invention.

The exemplary system scenario 100 comprises a plurality of user electronic devices. For example, the exemplary system scenario 100 comprises a first user electronic device 111 (e.g., a personal computer), a second user electronic device 112, a third user electronic device 113 and a fourth user electronic device 114 (e.g., a cellular phone or portable media device). A user electronic device may comprise characteristics of any of a variety of electronic devices (e.g., consumer electronic devices). For example and without limitation, a user electronic device may comprise characteristics of a personal computer (e.g., desktop computer, laptop computer, pocket computer, etc.), a media playing device, a game console, a personal video recorder ("PVR"), a set top box, a satellite receiver, a phone, a personal digital assistant ("PDA"), entertainment system, general networked device, etc.

The exemplary system scenario 100 also comprises a plurality of user profile management systems, which may also be referred to herein as user profile managers, user profile servers, user preference managers and/or user preference servers. For example, the exemplary system scenario 100 comprises a first user profile management system 121 and a second user profile management system 122. A user profile management system may, for example, comprise a computing system that manages (or maintains) one or more user profiles comprising user preference information regarding the manner in which one or more users prefer one or more electronic devices to operate and provides such user preference information to other systems/devices. A non-limiting set of examples of such user operational preferences was presented previously. A user profile management system may, for example, be communicatively coupled to one or more user electronic devices through any of a variety of communication networks and/or direct communication links.

A user profile management system may be geographically located in any of a variety of locations. For example and without limitation, a user profile management system may be located at the same premises as one or more user electronic devices. For example, a user profile management system may be implemented at a personal computer. Also for example, a user profile management system may be located at a geographically remote site. Such a user profile management system may, for example, manage user profile/preference information associated with a geographical region, particular group of users, etc. For example, user operational preference information may be stored in a central repository/server (e.g., a networked server and/or database).

The exemplary computing environment 100 also includes a variety of exemplary communication networks that may communicatively couple the user electronic devices 111, 112, 113, 114 and the user profile management systems 121, 122. For example, the exemplary computing environment 100 includes the Internet 131, a wireless local area network (WLAN) 132, wireless metropolitan area network (WMAN) 133 and cellular network 134, any or all of which may be communicatively coupled to each other. The exemplary communication networks 131-134 may, for example, be utilized to communicate user preference information associated with the user electronic devices 111-114 to and/or from the user profile management systems 121-122. The exemplary communication networks 131-134 may also, for example, be utilized to communicate generic information during utilization of various user electronic devices and/or user profile management systems. Note that the communication networks illustrated in Figure 1 are merely exemplary and non-limiting. For example and without limitation, a communication network may comprise characteristics of a personal area network ("PAN"), local area network ("LAN"), wide area network ("WAN"), metropolitan area network ("MAN"), the Internet, cellular communication network, cable network, telephone network, satellite communication network, etc.

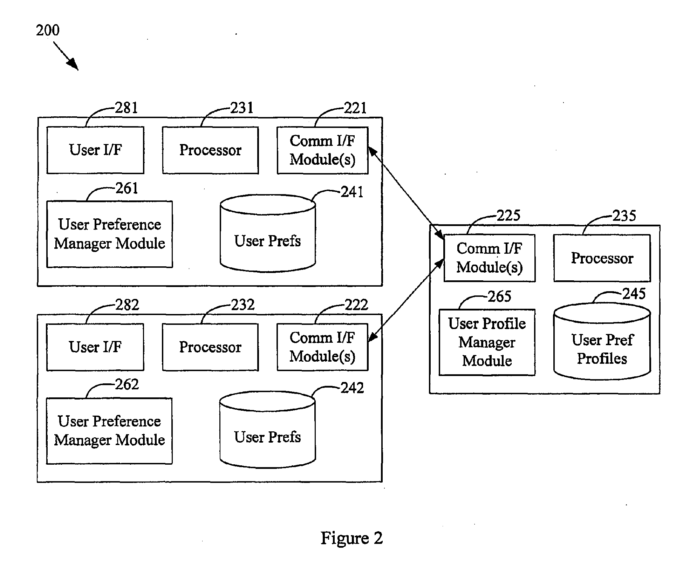

Various exemplary structural and/or functional characteristics of the entities shown in Figure 1 will be presented in Figures 2-6.

Figure 2 is a diagram illustrating a second non-limiting exemplary system scenario 200 incorporating management of evolving user preferences, in accordance with various aspects of the present invention. The exemplary system scenario 200 may, for example and without limitation, share any or all characteristics with the exemplary system scenario 100 illustrated in Figure 1 and discussed previously.

The exemplary system scenario 200 comprises a first user electronic device 201 and a second user electronic device 202. The first and second user electronic devices 201, 202 may share any or all characteristics with the exemplary user electronic devices discussed previously (e.g., the user electronic devices 111-114 of Figure 1). The exemplary system scenario 200 also comprises a user profile management system 205. The user profile management system 205 may share any or all characteristics with the exemplary user profile management system discussed previously (e.g., the user profile management systems 121, 122 of Figure 1). The first and second user electronic devices 201, 202 may, for example, be communicatively coupled to the user profile management system 205 (e.g., concurrently or at different times).

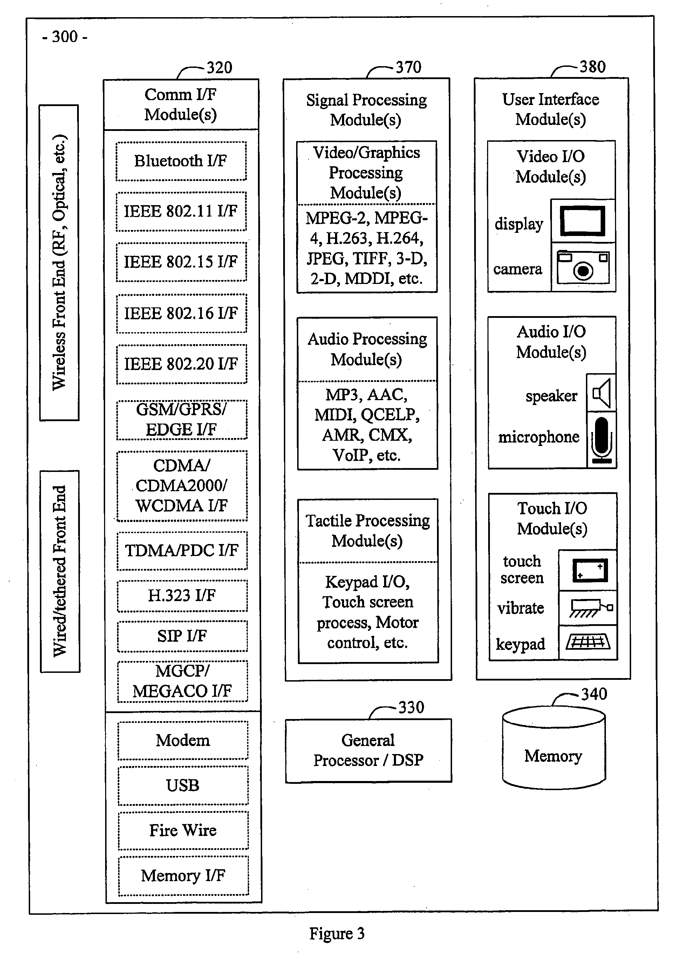

The first user electronic device 201 may, for example, comprise one or more communication interface modules 221. Such communication interface module(s) 221 may be operable to perform communications between the first user electronic device 201 and any of a large variety of other entities through any of a large variety of communication networks. Non-limiting examples of such communication interface module(s) 221 are shown at block 320 of Figure 3. The second user electronic device 202 may, for example, comprise one or more of such communication interface modules 222 as well. The first and/or second user electronic devices 201, 202 may, for example, utilize the one or more communication interface module(s) 221, 222 to communicate with a user profile management system (e.g., user profile management system 205 illustrated in Figure 2) and/or to communicate with each other.

The first user electronic device 201 may also, for example, comprise one or more processors 231. Such processor(s) 231 may comprise characteristics of any of a variety of processing circuits. For example and without limitation, such processor(s) 231 may comprise characteristics of any of a variety of microprocessors, microcontrollers, co-processors, digital signal processors, media processors, user I/O processors, signal processing circuits, application-specific processors, etc. Non-limiting examples of such processor(s) 231 are shown at blocks 330 and 370 of Figure 3. The second user electronic device 202 may, for example, comprise one or more of such processors 232 as well. The first and/or second user electronic devices 201, 202 may, for example, utilize the one or more processors 231, 232 to perform any of a variety of signal processing, operational management, and/or program execution activities.

The first user electronic device 201 may additionally, for example, comprise one or more memory devices 241. Such memory devices 241 may comprise characteristics of any of a variety of memory types and/or devices. For example and without limitation, such memory device(s) 241 may comprise characteristics of random access memory (RAM), read-only memory (ROM), volatile memory, non-volatile memory, hard drive memory, optical memory, magnetic memory, removable disk memory, on-board or off-board memory, flash memory, EPROM memory, EEPROM memory, local memory, non-local networked memory, etc. The second user electronic device 202 may, for example, comprise one or more of such memory devices 242 as well. The first and/or second user electronic devices 201, 202 may, for example, utilize the one or more memory devices 241, 242 to store any of a variety of types of information. Such information may, for example and without limitation; comprise general data, executable software instructions and/or information related to the manner in which a user is utilizing or prefers to utilize the first and/or second user electronic devices 201, 202.

The first user electronic device 201 may further, for example, comprise one or more user interface modules 281. Such user interface module(s) 281 may comprise characteristics of any of a variety of types of user interface modules (hardware and/or software). For example and without limitation, such user interface module(s) 281 may comprise characteristics of any of a variety of hardware, software, user input devices and/or user output devices, etc. Non-limiting examples of such user interface module(s) 281 are shown at block 380 of Figure 3. The second user electronic device 202 may, for example, comprise one or more of such user interface modules 282 as well. The first and/or second user electronic devices 201, 202 may, for example, utilize the one or more user interface modules 281, 282 to interact with a user in any of a variety of manners. For example and without limitation, the first and/or second user electronic devices 201, 202 may, for example, utilize the one or more user interface modules 281, 282 to interact with a user regarding obtaining information as to how a user desires the first and/or second electronic devices 201, 202 to operate. Also for example, the first and/or second user electronic devices 201, 202 may, for example, utilize the one or more user interface modules 281, 282 to present information to a user (*e.g*., in a manner specified by a user as information presentation preferences).

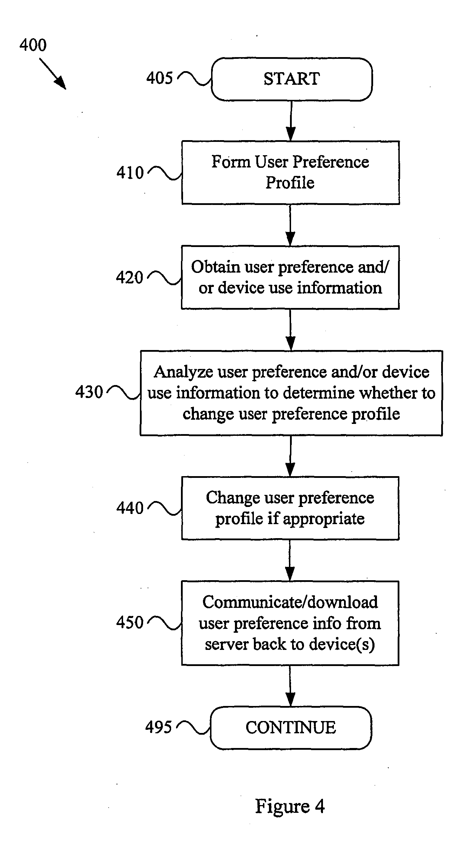

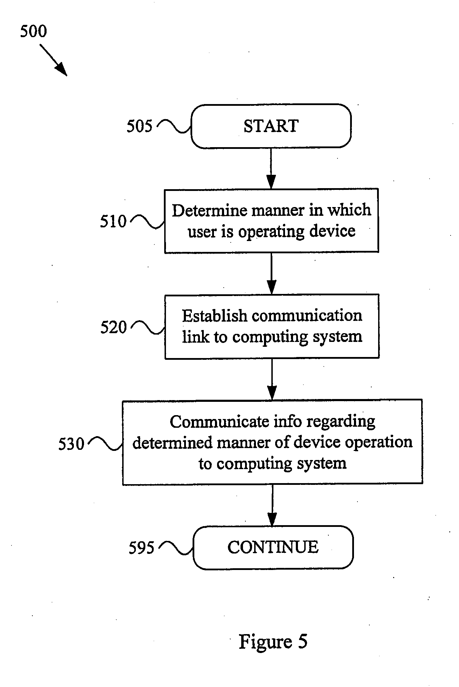

The first user electronic device 201 may also, for example, comprise one or more user preference manager modules 261. Though illustrated as a separate block of the first user electronic device 201, the user preference manager module(s) 261 may share various portions with other illustrated blocks. For example and without limitation, the user preference manager module(s) 261 may be implemented as an independent hardware and/or software module, or the user preference manager module 261(s) (or portion thereof) may be implemented by the processor 231 executing software instructions stored in the memory 241. The user preference manager module(s) 261 may, for example, operate to perform various functions discussed later with regard to Figures 4-6. For example and without limitation, the user preference manager module(s) 261 may operate to perform, or direct the performance of, any or all functions discussed later with regard to Figure 5.

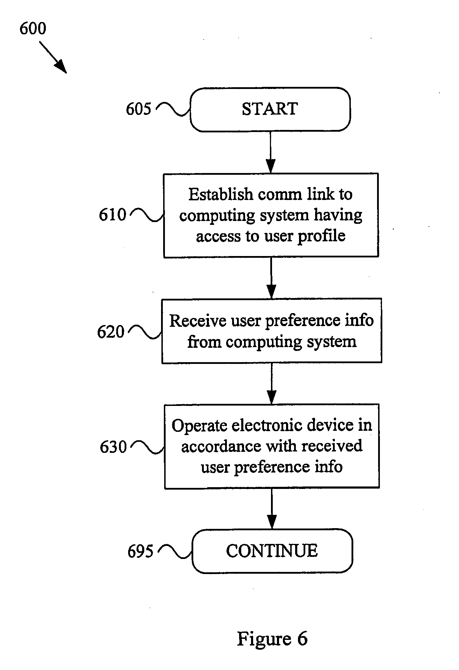

The second user electronic device 202 may, for example, comprise one or more of such user preference manager module(s) 262 as well. The user preference manager module(s) 262 may, for example, operate to perform various functions discussed later with regard to Figures 4-6. For example and without limitation, the user preference manager module(s) 262 may operate to perform, or direct the performance of, any or all functions discussed later with regard to Figure 6.

The user profile management system 205 may comprise one or more communication interface modules 225. Such communication interface module(s) 225 may be operable to perform communications between the user profile management system 205 and any of a large variety of other entities through any of a large variety of communication networks. Non-limiting examples of such communication interface modules 201 are shown at block 320 of Figure 3. The user profile management system 205 may, for example, utilize the one or more communication interface module(s) 225 to communicate with one or more user electronic devices (e.g., the first user electronic device 201 and/or the second user electronic device 202).

The user profile management system 205 may also, for example, comprise one or more processors 235. Such processor(s) 235 may comprise characteristics of any of a variety of processing circuits. For example and without limitation, such processor(s) 235 may comprise characteristics of any of a variety of microprocessors, microcontrollers, co-processors, digital signal processors, media processors, user I/O processors, signal processing circuits, application-specific processors, etc. Non-limiting examples of such processor(s) 235 are shown at blocks 330 and 370 of Figure 3. The user profile management system 205 may, for example, utilize the one or more processors 235 to perform any of a variety of signal processing, operational management, and/or program execution activities.

The user profile management system 205 may additionally, for example, comprise one or more memory devices 241. Such memory devices 241 may comprise characteristics of any of a variety of memory types and/or devices. For example and without limitation; such memory device(s) 241 may comprise characteristics of random access memory (RAM), read-only memory (ROM), volatile memory, non-volatile memory, hard drive memory, optical memory, magnetic memory, removable disk memory, on-board or off-board memory, flash memory, EPROM memory, EEPROM memory, local memory, non-local networked memory, etc. The user profile management system 205 may, for example, utilize the one or more memory devices 245 to store any of a variety of types of information. Such information may, for example and without limitation, comprise general data, executable software instructions and/or information related to the manner in which a user is utilizing or prefers to utilize the first and/or second user electronic devices 201, 202. Such information related to the manner in which a user is utilizing or prefers to utilize the first and/or second user electronic devices 201, 202 may, for example, be stored in one or more user profiles corresponding to one or more particular users and/or user groups.

Though not illustrated in Figure 2, the user profile management system 205 may further, for example, comprise one or more user interface modules 285. Such user interface module(s) 285 may comprise characteristics of any of a variety of types of user interface modules. For example and without limitation, such user interface module(s) 285 may comprise characteristics of any of a variety of hardware, software, user input devices and/or user output devices, etc. Non-limiting examples of such user interface module(s) 285 are shown at block 380 of Figure 3. The user profile management system 205 may, for example, utilize the one or more user interface modules 285 to interact with a user thereof in any of a variety of manners.

The user profile management system 205 may also, for example, comprise one or more user profile manager modules 265, which may also be referred to as user profile server modules. Though illustrated as a separate block of the user profile management system 205, the user profile manager module(s) 265 may share various portions with other illustrated blocks. For example and without limitation, the user profile manager module(s) 265 may be implemented as an independent hardware and/or software module, or the user profile manager module 265(s) (or portion thereof) may be implemented by the processor 235 executing software instructions stored in the memory 245. The user profile manager module(s) 265 may, for example, perform various functions discussed later with regard to Figures 4-6. For example and without limitation, the user profile manager module(s) 265 may perform or direct the performance of any or all functions discussed later with regard to Figure 4.

Figure 3 is a block diagram of an exemplary system 300, in accordance with various aspects of the present invention. The exemplary system 300 may, for example and without limitation, share any or all characteristics with the exemplary user devices 111-114 illustrated in Figure 1 and discussed previously and/or exemplary user devices 201-202 illustrated in Figure 2 and discussed previously. Also, the exemplary system 300 may, for example and without limitation, share any or all characteristics with the exemplary user profile management systems 121-122 illustrated in Figure 1 and discussed previously and/or exemplary user profile management system 205 illustrated in Figure 2 and discussed previously.

The exemplary system 300 comprises a variety of non-limiting illustrative communication interface modules 320. Such modules 320 may, for example, operate to communicatively couple the system 300 to any of a variety of other computing and/or communicating entities through any of a variety of communication networks. For example and without limitation, the communication interface modules 320 may comprise interface modules associated with a variety of communication protocols (e.g., Bluetooth, IEEE 802.11, IEEE 802.15, IEEE 802.16, IEEE 802.20, GSM/GPRS/EDGE, CDMA/CDMA 2000/WCDMA, TDMA/PDC, H.232, SIP, MGCP/MEGACO, etc.). The communication interface modules 320 may also comprise one or more modem interface modules, USB interface modules, FireWire interface modules and/or various memory interface modules. The system 300 may also comprise any of a variety of front-end communication circuits associated with communicating over a particular communication medium (e.g., wired, wireless, tethered optical, non-tethered optical media, etc.).

The exemplary system 300 also comprises general processing and/or digital signal processing circuitry 330 and a memory 340. Such processing circuitry 330 and/or memory 340 may share any or all characteristics with the processing circuitry and/or memory discussed previously with regard to Figures 1-2.

The exemplary system 300 also comprises a variety of user interface modules 380. As will be discussed later with regard to the method 400 illustrated in Figure 4, various aspects of the present invention may include user interface aspects. Such user interface aspects may, for example, be performed utilizing any of the exemplary user interface modules 380 or other types of user interface devices, hardware and/or software not illustrated. The exemplary user interface module 380 may, for example, comprise video I/O modules (*e.g*., display output modules, camera input modules, etc.), audio I/O modules (*e.g*., speaker output modules, microphone input modules, etc.), touch (or tactile) I/O modules (*e.g.*, touch screen input modules, vibratory output modules, keypad input modules, trackball input modules, mouse input modules, touch pad input modules, etc.).

Figure 4 illustrates a flow diagram of an exemplary method 400 in a computing system for managing evolving user preferences (e.g., a user profile management system), in accordance with various aspects of the present invention. Various aspects of the exemplary method 400 (and the exemplary methods 500, 600 illustrated in Figures 5-6) may be performed by the user electronic devices 111-114, 201-202 discussed previously with regard to Figures 1-2. Additionally, various aspects of the exemplary method 400 (and the exemplary methods 500, 600 illustrated in Figures 5-6) may be performed by the user profile management systems 121-122, 205 discussed previously with regard to Figures 1-2. Though the following discussion of the exemplary method 400 will be discussed from the perspective of various system components (*e.g*., a user profile management system and one or more user electronic devices), it should be recognized that the performance of various portions of the functionality may be shifted between such system components.

The exemplary method 400 begins executing at step 405. The exemplary method 400 may begin executing in response to any of a variety of causes or conditions. For example and without limitation, the exemplary method 400 may begin executing in response to a user command to begin or in response to an operating profile of a computing system (*e.g.*, of a user electronic device and/or user profile management system. Also for example, the exemplary method 400 may begin executing in response to receiving a request for user profile updating and/or synchronization. The exemplary method 400 may also, for example, begin executing based on a predetermined schedule of operation. The scope of various aspects of the present invention should not be limited by characteristics associated with any particular initiating cause or condition.

The exemplary method 400 may, at step 410, comprise forming a user profile comprising information regarding the manner in which a user prefers one or more electronic devices separate from a computing system (e.g., a user profile management system) to operate. Such a user profile may be formed in any of a variety of manners. For example and without information, information of the manner in which a user utilizes one or more user electronic devices may be gathered and entered into a user profile as a user utilizes such an electronic device. Also for example, a user or representative thereof may explicitly input such profile information.

The user profile may, for example be stored in a memory of the computing system or in a memory accessible by the computing system *(e.g.,* a user profile management system). For example, in a non-limiting exemplary scenario, the user profile may be stored in memory associated with or accessible by, a user profile management system. As non-limiting examples, step 410 may comprise storing such a user profile in various types of memory onboard and/or external to the computing system *(e.g.,* at a central server or database). Various characteristics of such a computing system (e.g., a user profile management system) were discussed previously.

The user profile may comprise information regarding the manner in which the user (or group of users) prefers one or more electronic devices to operate. For example, the user profile may comprise information regarding the manner in which the user prefers a plurality of different electronic devices to operate. Such different electronic devices may, for example, be of a same fundamental type of device (e.g., first media player and a second media player) or may be of different fundamental types (e.g., a media player, a cellular telephone and a television set top box).

The information regarding the manner in which the user prefers one or more electronic devices to operate may comprise characteristics of any of a variety of types of information. A non-limiting set of examples of such user preferences was presented previously. For example and without information, the information may comprise information regarding the manner in which the user prefers one or more electronic devices to present information to the user. Various non-limiting examples of audio and/or video presentation preferences were presented previously.

Also for example, the information may comprise information regarding the manner in which the user prefers one or more electronic devices to process information. Such processing preferences may, for example, comprise preferences related to information processing coding/decoding, resolution, filtering, processing speed, error processing, security, etc. Further for example, the information may comprise information regarding the manner in which the user prefers one or more electronic devices to communicate with systems external to the electronic device. Such communication preferences may, for example, comprise network preferences, desired QoS settings, protocol preferences, preferred network addresses, security settings, etc.

Still further for example, the user profile may comprise any of a number of default or reset values. Such values may, for example, be subsequently modified by the system (e.g., during execution of various subsequent steps of the exemplary method 400). The user profile may also, for example, comprise user preference information that is stored in a standard and/or proprietary format. Such information may, for example, be storable, editable and/or accessible utilizing a standard and/or proprietary protocol.

Additionally, for example, the user profile may comprise information corresponding to a superset of a user electronic device. For example and without limitation, a user preference profile may comprise user preference information associated with a plurality of devices and/or types of devices, where at least a portion of such user preference information is not shared between the plurality of devices. For example, a user preference profile may comprise gaming operational preference information that is not utilized by an MP3 music player, music operational preference information that is not utilized by a portable movie viewer, etc.

In general, step 410 comprises forming a user profile comprising information regarding the manner in which a user prefers one or more electronic devices (e.g., separate from the computing system) to operate. Accordingly, the scope of various aspects of the present invention should not be limited by characteristics associated with any particular manner of forming a user preference profile or by characteristics associated with particular types of user preference information unless explicitly claimed.

The exemplary method 400 may, at step 420, comprise obtaining information regarding the manner in which the user is utilizing an electronic device (e.g., a user electronic device separate from the computing system implementing step 420).

The obtained (e.g., received) information regarding the manner in which the user is utilizing an electronic device separate from the computing system may comprise any of a variety of characteristics associated with electronic device operational preferences. Numerous examples of such preferences were presented previously. For example and without limitation, such information may comprise information regarding the manner in which the user prefers information to be presented to the user and/or the manner in which the user is utilizing the electron device to present information to the user. Also for example, such information may comprise information regarding the manner in which the user prefers information to be processed and/or the manner in which the user is utilizing the electronic device to process information. Further for example, such information may comprise information regarding the manner in which the user prefers the electronic device to communicate with systems external to the electronic device and/or the manner in which the user is utilizing the electronic device to communication with system external to the electronic device.

The obtained (e.g., received) information regarding the manner in which the user is utilizing an electronic device may comprise information of current (e.g., real-time) utilization. Such obtained (e.g., received) information may also, for example, comprise information regarding utilization of the electronic device over an interval (e.g., a time interval, number of device utilization instances, etc.).

Step 420 may comprise obtaining such information in any of a variety of manners. For example and without limitation, step 420 may comprise monitoring utilization of the electronic device by the user. Such monitoring may, for example, be performed by the computing system, one or more particular user electronic device being utilized by the user, a third party observer, etc.

Step 420 may, for example, comprise receiving the information regarding the manner in which the user is utilizing the electronic device from the user electronic device (e.g., during and/or after utilization of the device).

In a scenario there step 420 comprises receiving the information from another device, step 420 may, for example, comprise receiving the information in an unsolicited manner, for example initiated by a user of a user electronic device, initiated by the user electronic device in response to particular operating conditions, initiated by a user electronic device in accordance with a timed schedule, etc. Step 420 may, for example, comprise receiving the information in response to a solicitation by the computing system (e.g., a user profile management system) or another system for such information, and/or in response to a scheduled communication of such information. In a non-limiting exemplary scenario, the computing system may poll user electronic devices to acquire the information.

As mentioned above, step 420 may comprise receiving the information regarding the manner in which the user is utilizing the electronic device from the user electronic device. Figure 5 provides a non-limiting example of a method 500 that may be performed in a user electronic device to acquire, process and/or communicate such information to the computing system.

Referring to Figure 5, such figure illustrates a flow diagram of an exemplary method 500 in an electronic device for managing evolving user preferences, in accordance with various aspects of the present invention. Any or all portions of the exemplary method 500 may, for example and without limitation, be performed by any of the user electronic devices 111-114, 201-202, 300 presented in Figures 1-3 and discussed previously, or by components or circuitry thereof.

The exemplary method 500 begins at step 505. The exemplary method 500 may begin executing for any of a variety of reasons (e.g., in response to any of a variety of causes or conditions). For example and without limitation, the exemplary method 500 may begin executing in response to a user command to begin (e.g., a command to update a user profile or to gather preferred operational information for communication to another entity). Additionally for example, the exemplary method 500 may begin executing in response to an operating profile programmed into a user electronic device. Also for example, the exemplary method 500 may begin executing in response to receiving a request for user preference and/or device utilization information (e.g., from another computing system, for example, a user profile management system or another user electronic device). The exemplary method 500 may also, for example, begin executing based on a predetermined schedule of operation: The exemplary method 500 may, for example, begin executing in response to user entry of operational preference information at the user electronic device (e.g., during utilization of the user electronic device). The scope of various aspects of the present invention should not be limited by characteristics associated with any particular initiating cause or condition.

The exemplary method 500 may, at step 510, comprise determining a manner in which a user is operating (or utilizing) the user electronic device. Step 510 may, for example, comprise determining any of a variety of user preferences or device use characteristics associated with the manner in which the user is operating the user electronic device. Many examples of such preferences were presented previously.

For example and without limitation, step 510 may comprise determining information regarding the manner in which the user has directed the user electronic device to present information to the user. Also for example, step 510 may comprise determining information regarding the manner in which the user has directed the user electronic device to process information. Further for example, step 510 may comprise determining information regarding the manner in which the user has directed the user electronic device to communicate with systems external to the user electronic device.

Step 510 may, for example, comprise monitoring utilization of the user electronic device by the user and determining, based at least in part on the monitoring, the manner in which the user is operating the user electronic device. For example and without limitation, step 510 may comprise monitoring user settings that affect the manner in which the user electronic device operates. Such monitoring may, for example, be performed by the user electronic device and/or an entity different from the user electronic device. Step 510 may, for example, comprise analyzing operational settings specified by the user while utilizing the user electronic device. Such operational settings may, for example, provide an indication of the manner in which the user prefers the user electronic device to operate.

Note that such monitoring may be conducted as a background operation of the user electronic device. For example and without limitation, various aspects of the exemplary method 500, including step 510, may be performed by a background process (e.g., a daemon) executed by a processor of the user electronic device. In the exemplary scenario where step 510 comprises monitoring the utilization of the user electronic device, such monitoring may occur with or without direct user interaction, potentially even without indicating to the user that such monitoring is occurring.

Step 510 may, for example, comprise determining the manner in which a user is presently utilizing the user electronic device. Also for example, step 510 may comprise determining information regarding a manner in which the user has utilized the user electronic device during an interval (e.g., a timed interval, particular number of uses, etc.). Further for example, step 510 may comprise determining a difference between how the user is utilizing the user electronic device and how the user previously utilized the user electronic device.

The exemplary method 500 may, at step 520, comprise communicatively coupling to a computing system that is separate from the electronic device. For example and without limitation, the computing system may be a computing system (e.g., a user profile management system) operating in accordance with the exemplary method 400 illustrated in Figure 4 (or a portion thereof).

Step 520 may comprise communicatively coupling to the computing system in any of a variety of manners. For example and without limitation, step 520 may comprise communicatively coupling to the computing system through a communication network (e.g., any of the types of communication networks discussed previously). Also for example, step 520 may comprise communicatively coupling to the computing system via a direct wired or wireless link. Step 520 may, for example, comprise communicatively coupling to the computing system utilizing any of a large variety of standard and/or proprietary communication protocols and/or media.

The exemplary method 500 may, at step 530, comprise communicating information regarding the determined manner in which a user is operating (or utilizing) an electronic device (e.g., as determined at step 510) to the computing system. As will be discussed below with regard to Figure 4, the information communicated at step 530 may, for example, cause the computing system to modify a user profile corresponding to the user, where the user profile comprises information regarding the manner in which the user prefers one or more electronic devices to operate.

Returning to the exemplary method 400 illustrated in Figure 4, the exemplary method 400 may, at step 430, comprise analyzing at least the manner in which the user is utilizing the electronic device and the stored user profile to determine whether and/or how to modify the stored user profile. In the exemplary method 400, step 430 or portions thereof may, for example, be skipped in a scenario where it is predetermined that the stored user profile will be modified and/or modified in a predetermined manner. As a non-limiting example, a user may command that a stored user profile be modified.

Step 430 may comprise analyzing the manner in which the user is operating (or utilizing) the electronic device in any of a variety of manners. For example and without limitation, step 430 may comprise determining a level of significance of a difference between the manner in which the user is utilizing the electronic device and the stored user profile and determining whether to modify the stored user profile based, at least in part, on the determined level of significance. For example, in various scenarios, an occasional difference and/or minor difference between the manner in which the user is utilizing the electronic device and the manner in which the user profile indicates the user prefers to utilize the electronic device might not justify the computing system modifying the stored user profile. For example, it is anticipated that a user might not utilize an electronic device in exactly the same manner every time. In a non-limiting exemplary scenario, a one-time deviation in an operational preference might be deemed too insignificant to warrant modifying a corresponding user profile parameter.

Step 430 may, for example, comprise determining a magnitude of difference between the manner in which the user is utilizing the electronic device and the manner in which the stored user profile indicates the user prefers the electronic device to operate. Step 430 may then, for example, analyze the determined magnitude to determine whether the determined magnitude is significant enough to justify modifying the stored user profile.

In another example, step 430 may comprise statistically analyzing the manner in which the user is utilizing the electronic device. For example, the manner in which the user is utilizing the electronic device may correspond to a particular user preference. Such particular user preference might, in turn, correspond to a particular statistical distribution. Step 430 may, for example, statistically determine a level of variance (e.g., a standard deviation) associated with the manner in which the user is utilizing the electronic device and determine based on the level of variance whether the variance is statistically significant. For example, a statistically significant variance might justify modifying the stored user profile.

Similarly, step 430 may also comprise performing trend analysis by analyzing a particular number of previous determined manners to determine whether the manner in which the user is utilizing the electronic device corresponds to a significant change in preferred device operation relative to a corresponding user preference contained in the user profile. For example, step 430 may comprise performing statistical trend analysis to determine whether a difference in manner of electrical device operation is statistically significant enough to warrant modifying the stored user profile.

Also, step 430 may comprise determining whether a particular user operational preference (or device utilization) is a new type of preference or a modification of an old preference. For example, step 430 may comprise determining whether to modify a user profile in accordance with different respective criteria for new operational preferences versus existing operational preferences.

In general, step 430 may comprise analyzing at least the manner in which the user is operating (or utilizing) the electronic device and the stored user profile to determine whether and/or how to modify the stored user profile. Accordingly, the scope of various aspects of the present invention should not be limited by characteristics of any particular type of analysis unless explicitly claimed.

The exemplary method 400 may, at step 440, comprise modifying the stored user profile if it is determined (e.g., at step 430) that such modification is warranted. For example, step 440 may comprise modifying the stored user profile based, at least in part, on the manner in which the user is utilizing the electronic device. Step 440 may comprise modifying the stored user profile in any of a variety of manners. For example, step 440 may comprise modifying stored user profile information that is specific to a particular user and electronic device and/or specific to a particular user and type of electronic device. Further for example, step 440 may comprise modifying stored user profile information that is specific to an operational characteristic of the user electronic device, where the operational characteristic is applicable to a plurality of different user electronic devices and/or to a plurality of different types of user electronic devices.

Steps 430 and 440, generally comprising determining whether and/or how to modify the stored user profile, may be considered examples of maintaining and/or managing the stored user profile. As explained previously, another example of such maintaining and/or managing includes the unconditional modification of the stored user profile based on received information concerning the operation of the electronic device by the user. As yet another example, such maintaining and/or managing may comprise asking for user verification prior to making a change in the stored user profile.

The exemplary method 400 may, at step 440, generally comprises modifying the stored user profile based, at least in part, on the manner in which the user is operating (or utilizing) the electronic device. Step 440 may comprise performing such modifying in any of a variety of manners. Accordingly, unless explicitly claimed, the scope of various aspects of the present invention should not be limited by characteristics of any particular type of modification that may be made to the stored user profile or by characteristics of any particular type of user preference information included in such a stored user profile.

The exemplary method 400 may, at step 450, comprise communicating information from the stored user profile to a user electronic device (*e.g.,* a second user electronic device) separate from the computing system and associated with the user. The second user electronic device may, for example and without limitation, be of the same fundamental type as a first user electronic device from which the information from the stored user profile was obtained. In various exemplary scenarios, the second user electronic device may, for example, be the same user electronic device as that from which at least a portion of the information from the stored user profile was obtained. In other words, information from a particular user electronic device may be utilized to form and/or maintain a stored user profile, which is subsequently communicated back to the particular user electronic device. In yet another exemplary scenario, the second user electronic device may be a different fundamental type of device than the first user electronic device. In such a situation, the communicated information may comprise user preference information that is common to both fundamental types of device. As a non-limiting example, a user's audio preferences may transcend a plurality of different fundamental types of user electronic devices.

Step 450 may, for example, be performed in response to a request by the user electronic device for the user profile information or a specific portion thereof. Such a request may arrive at the computing system in an unsolicited manner *(e.g.,* asynchronously) or may arrive synchronously (*e.g.,* in an allocated timeslot or in response to a poll message).

As mentioned above, step 450 may comprise communicating user profile information, or a portion thereof, from the computing system to a user electronic device. Figure 6 provides a non-limiting example of a method 600 that may be performed in a user electronic device to receive such information from the computing system and/or operate in accordance with such received information.

Referring to Figure 6, such figure illustrates a flow diagram of an exemplary method 600 in an electronic device for managing evolving user preferences, in accordance with various aspects of the present invention. Any or all portions of the exemplary method 600 may, for example and without limitation be performed by any of the user electronic devices 111-114, 201-202, 300 presented in Figures 1-3 and discussed previously, or by components or circuitry thereof.

The exemplary method 600 begins at step 605. The exemplary method 600 may begin executing for any of a variety of reasons (e.g., in response to any of a variety of causes or conditions). For example and without limitation, the exemplary method 600 may begin executing in response to a user command to begin (e.g., a command to synchronize the user preferences or initialization of a device set-up procedure). Additionally, the exemplary method 600 may begin executing in response to an operating profile of a user electronic device. Also for example, the exemplary method 600 may begin executing in response to a signal received from a computing system (e.g., a user profile management system). Such a signal may, for example, comprise a message indicating that the computing system has access to updated user profile information, a message requesting or commanding that the user electronic device update user preference information, etc. The exemplary method 600 may also, for example, begin executing based on a predetermined schedule of operation. The exemplary method 600 may further, for example, begin executing as a result of a resetting or power-up sequence. The scope of various aspects of the present invention should not be limited by characteristics associated with any particular initiating cause or condition.

The exemplary method 600 may, at step 610, comprise establishing a communication link to a computing system that has access to a user profile. Such a user profile may, for example, comprise user preference information regarding the manner in which the user prefers one or more electronic devices separate from the computing system to operate. For example and without limitation, the computing system may be a computing system (e.g., a user profile management system) operating in accordance with the exemplary method 400 illustrated in Figure 4 (or a portion thereof).

Step 610 may comprise establishing a communication link to the computing system in any of a variety of manners. For example and without limitation, step 610 may comprise establishing a communication link to the computing system through a communication network (e.g., any of the types of communication networks discussed previously). In a non-limiting scenario where a user electronic device initiates the establishment of the communication link, step 610 may comprise attempting to establish a communication link to a known communication network address *(e.g.,* default, predetermined, user-defined, etc.) associated with a computing system that has access to user profile information. Also for example, step 610 may comprise communicatively coupling to the computing system via a direct wired or wireless link. Step 610 may, for example, comprise communicatively coupling to the computing system utilizing any of a large variety of standard and/or proprietary communication protocols and/or media.

The exemplary method 600 may, at step 620, comprise receiving user preference information from the computing system. Such user preference information may, for example, correspond to at least a portion of user preference information stored in a user profile accessible by the computing system.

Step 620 may, for example, comprise receiving user preference information from the computing system in an unsolicited manner and/or may, for example, comprise receiving user preference information from the computing system in a response to a solicitation. For example, step 620 may comprise receiving user preference information from the computing system in response to a message communicated from the user electronic device to the computing system requesting the user preference information. In a non-limiting exemplary scenario, a user electronic device implementing the exemplary method 600 may request a particular type of user preference information from the computing system. In a further non-limiting exemplary scenario, a user electronic device may request operational preference information associated with a particular user or a group of users.

As discussed previously, the user preference information may comprise any of a variety of characteristics (e.g., characteristics associated with electronic device operational preferences). Many examples of such preferences were presented previously. For example and without limitation, such information may comprise information regarding the manner in which the user prefers information to be presented to the user. Also for example, such information may comprise information regarding the manner in which the user prefers information to be processed. Further for example, such information may comprise information regarding the manner in which the user prefers the electronic device to communicate with systems external to the electronic device.

The exemplary method 600 may, at step 630, comprise operating the user electronic device in accordance with received user preference information (e.g., as received at step 620). Step 630 may comprise operating the user electronic device in any of a variety of manners, for example, in accordance with the particular type of electronic device. For example and without limitation, step 630 may comprise presenting information to a user of the electronic device in a manner specified by the received user preference information. Also for example, step 630 may comprise processing information in a manner specified by the received user preference information. Further for example, step 630 may comprise establishing, utilizing, maintaining and/or tearing down communication links with various communication networks in a manner specified by the received user preference information.

The exemplary method 600 may, at step 695, comprise continuing operation (*e.g*., on a user electronic device implementing the method 600) in any of a variety of manners. For example and without limitation, step 495 may comprise returning execution flow of the exemplary method 600 back to any previous step (*e.g*., step 610). Such return of execution flow may, for example, correspond to a particular operating condition and/or event (*e.g*., a timer related event, a received signal related event, a user command event, etc.).

Any or all steps of the exemplary method 600 may, for example, be performed without or without direct user interaction while performing the step(s). As a non-limiting example, any or all steps of the exemplary method 600 may be performed in response to operational rules established prior to execution of the exemplary step(s) but without interacting with the user during the performance of such step(s). In another non-limiting example, any or all steps of the exemplary method 600 may comprise asking the user to confirm the performance of such step(s).

Returning to the exemplary method 400 illustrated in Figure 4, the method 400 may, at step 495, comprise performing continued operation. Step 495 may comprise continuing operation in any of a variety of manners. For example and without limitation, step 495 may comprise returning execution flow of the exemplary method 400 back to any previous step (*e.g*., step 420). Such return of execution flow may, for example, correspond to a particular operating condition and/or event (*e.g*., a timer related event, a received signal related event, a user command event, etc.).

Various aspects of the present invention will now be presented by way of non-limiting exemplary scenarios.

In a first non-limiting exemplary scenario, a user may be operating a media playing device. The user may, for example, be utilizing the media playing device using particular audio and/or video presentation settings, file settings, streaming media settings, etc. The user operational preferences associated with the user's use of the media playing device may be monitored, analyzed and stored in a user preference management system (e.g., in a user profile) or in a system accessible to a user preference management system. Subsequent use of the particular device by the user or use of other media presenting devices by the user may trigger access of user operational preference information stored by or accessible to the user preference management system. Such stored user preference information may then be transferred from the user preference management system and utilized to govern future operation of the accessing user electronic device.

In a second non-limiting exemplary scenario, a user may utilize a game console to play video games (e.g., a networked gaming session). During the establishment and/or participation in the gaming session, the user may enter particular preference settings (e.g., U/I settings, network communication settings, media presentation settings, play level settings, etc.) and/or exhibit particular patterns of use, which may be monitored and analyzed for storage as user operational preference information. Information related to the user operational preferences and/or device utilization may be stored at a user preference management system for future access (e.g., with future utilization of the same gaming device or a different gaming device).

In a third non-limiting exemplary scenario, a user may utilize a pocket computer to couple to a particular communication network. The user may, for example, select any one or more of a plurality of communication networks with which to communicate using any of a plurality of settings. The user may also, for example, specify particular communication link requirements (e.g., QoS setting information). Such use by the user, including preferred settings, may be monitored by the user electronic device and/or a device communicatively coupled to the user electronic device. Such monitoring may result in the modification of user operational preference information, for example stored in a user profile corresponding to the user. For example, a particular user consistently choosing to couple to a particular communication network using particular preferences may warrant changing user operational preference information in a user profile stored at a user preference management system.
Then future use of a next user device (or even the same user device) by the user may trigger access of the user operational preference information from the user preference management system, such accessed information then governing operation of the next user device. In such a manner, user operational preferences may be monitored, tracked and evolved as more is learned about a particular user, group of users, user device, type of device, etc.

Various exemplary structural and/or functional aspects of the present invention were illustrated in Figures 1-6 and discussed previously. Various aspects of the present invention may be implemented in any of a variety of manners. For example and without limitation, any or all functional aspects of the present invention may be implemented by hardware, software and/or a combination thereof. For example, the various blocks illustrated in Figures 1-3 may be implemented by hardware and/or software. As a non-limiting example, various blocks may also be implemented in one or more integrated circuits.

Additionally, various aspects of the present invention were illustrated and discussed modularly. It should be recognized that various module boundaries were established and presented for illustrative clarity. For example, various modules may share various hardware and/or software components. Also for example, various modules may be implemented separately (e.g., in respective integrated circuits or a combined integrated circuit).

In summary, various aspects of the present invention provide a system and method for managing evolving user preferences.

While the invention has been described with reference to certain aspects and embodiments, it will be understood by those skilled in the art that various changes may be made and equivalents may be substituted without departing from the scope of the invention. In addition, many modifications may be made to adapt a particular situation or material to the teachings of the invention without departing from its scope. Therefore, it is intended that the invention not be limited to the particular embodiment disclosed, but that the invention will include all embodiments falling within the scope of the appended claims.

## Claims

1. In a computing system, method for managing evolving user preferences, the method comprising:
forming a user profile comprising information regarding the manner in which a user prefers one or more electronic devices separate from the computing system to operate;
storing the user profile in memory;
obtaining information regarding the manner in which the user is utilizing an electronic device separate from the computing system;
analyzing at least the manner in which the user is utilizing the electronic device and the stored user profile to determine whether to modify the stored user profile; and
if it is determined to modify the stored user profile, then modifying the stored user profile based, at least in part, on the manner in which the user is utilizing the electronic device.

2. The method of claim 1, wherein the user profile comprises information regarding the manner in which the user prefers a plurality of different electronic devices to operate.

3. The method of claim 1, wherein the user profile comprises information regarding the manner in which the user prefers a plurality of different types of electronic devices to operate.

4. The method of claim 1, wherein the information regarding the manner in which the user prefers one or more electronic devices to operate comprises information regarding the manner in which the user prefers information to be presented to the user.

5. In an electronic device, a method for managing evolving user preferences, the method comprising:
determining a manner in which a user is operating the electronic device;
communicatively coupling to a computing system that is separate from the electronic device; and
communicating information regarding the determined manner to the computing system, the communicated information causing the computing system to modify a user profile corresponding to the user, the user profile comprising information regarding the manner in which the user prefers one or more electronic devices to operate.

6. In an electronic device, a method for managing evolving user preferences, the method comprising:
establishing a communication link to a computing system that has access to a user profile, the user profile comprising user preference information regarding the manner in which the user prefers one or more electronic devices separate from the computing system to operate;
receiving at least a portion of the user preference information from the computing system; and
operating the electronic device in accordance with the received user preference information.

7. In a computing system, a method for managing user preference information, the method comprising:
storing a user profile in memory of the computing system, the user profile comprising information regarding the manner in which a user prefers one or more electronic devices separate from the computing system to operate;
receiving at the computing system information from an electronic device separate from the computing system regarding the manner in which the user is utilizing the electronic device; and
maintaining the stored user profile based, at least in part, on the received information.

8. In a computing system, a method for managing user preference information, the method comprising:
receiving at the computing system information from a first electronic device separate from the computing system regarding the manner in which a user is utilizing the first electronic device.
managing, based at least in part on the received information, a user profile stored at the computing system, the user profile comprising information regarding the manner in which the user prefers one or more electronic devices separate from the computing system to operate;
communicating information from the user profile to a second electronic device separate from the computing system and associated with the user.

9. Electrical circuitry for managing user preference information, the electrical circuitry comprising:
at least one circuit that operates to, at least:
determine a manner in which a user prefers an electronic device to operate;
communicatively couple to a computing system that is separate from the electronic device; and
communicate information regarding the determined manner to the computing system, the communicated information causing the computing system to modify a user profile corresponding to the user, the user profile comprising information regarding the manner in which the user prefers one or more electronic devices to operate.

10. Electrical circuitry for managing user preference information, the electrical circuitry comprising:
at least one circuit that operates to, at least:
establish a communication link to a computing system that has access to a user profile, the user profile comprising user preference information regarding the manner in which the user prefers one or more electronic devices separate from the computing system to operate;
receive at least a portion of the user preference information from the computing system; and
operate the electronic device in accordance with the received user preference information.
